# EUROPÄISCHE PATENTSCHRIFT

(11) **EP 2 988 910 B1**
(45) Veröffentlichungstag und Bekanntmachung des Hinweises auf die Patenterteilung: **06.05.2026**
(21) Anmeldenummer: 14714266.5
(22) Anmeldetag: 31.03.2014
(51) Int. Cl.: B25F 5/02, H01H 3/20

(54) **BAUTEIL, VERFAHREN ZUR VERBINDUNG VON HOLZELEMENTEN, COMPUTERPROGRAMM**
CONSTRUCTION PART, PROCESS TO BIND WOOD ELEMENTS, PROGRAM
PIECE DE CONSTRUCTION, PROCEDE POUR LIER DES ELEMENTS EN BOIS, PROGRAMME

(30) Priorität: 24.04.2013 CH 828132013
(43) Veröffentlichungstag der Anmeldung: 02.03.2016
(73) Patentinhaber: Timber Structures 3.0 AG, 3600 Thun (CH)
(72) Erfinder: ZÖLLIG, Stefan, CH-3600 Thun (CH)
(74) Vertreter: P&TS SA (AG, Ltd.)
(86) Internationale Anmeldenummer: PCT/EP2014/056407
(87) Internationale Veröffentlichungsnummer: WO 2014/173633

(56) Entgegenhaltungen:
- EP-A1- 0 272 342
- EP-A1- 0 309 356
- EP-A2- 0 038 041
- EP-A2- 0 236 283
- WO-A1-01/07218
- WO-A1-2007/048149
- WO-A1-2021/060997
- WO-A1-92/16703
- AT-A2- 507 249
- AT-A4- 505 772
- DE-A1- 102011 050 874
- DE-A1- 19 642 369
- DE-A1- 3 217 612
- DE-B- 1 175 856
- DE-B3- 102007 014 832
- DE-C- 526 565
- DE-C- 641 242
- DE-C- 943 972
- DE-U1- 8 215 265
- FR-A- 786 001
- FR-A1- 2 215 298
- LU-A1- 35 568
- US-A- 1 594 889
- US-A1- 2005 161 116
- US-A1- 2013 034 717
- US-A1- 2013 065 013
- US-B1- 6 428 871
- JEREMY BROUN: "Titebond End Grain Glue Test", 1 March 2013 (2013-03-01), Retrieved from the Internet <URL:https://www.youtube.com/watch?v=ER1k4Pcyn0M> [retrieved on 20200108]
- FESTOOL USA: "Festool Domino DF 500 Joiner - Easy Mortise and Tenon Joinery", 4 April 2012 (2012-04-04), Retrieved from the Internet <URL:https://www.youtube.com/watch?v=GYW_9MgSp6Q> [retrieved on 20200108]

## Beschreibung

Die Erfindung bezieht sich auf eine Verbindung von Holz.

### Stand der Technik

Holz zeigt relativ zu der Ausrichtung der Fasern unterschiedliche Eigenschaften. In der Hauptausrichtung der Fasern ist Holz sehr druck- und zugstabil und kann sehr hohen Kräften widerstehen, da die einzelnen Fasern zusammen Faserbündel bilden. Hingegen genügen bereits geringe Kräfte, die rechtwinkelig auf die Hauptausrichtung der Fasern des Holzes einwirken, um das Holz zu beschädigen. Unter Berücksichtigung der Faserrichtung des Holzes können somit sehr stabile Konstruktionen gebildet werden.

Allerdings haben Holzkonstruktionen eine natürliche Begrenzung, nämlich die Höhe des Baumes in Richtung der Faserung und die Dicke des Baumes rechtwinkelig zu der Hauptausrichtung der Faserung. Deshalb gibt es eine Reihe von Verbindungen für Holzelemente, um diese Limitierungen zu beheben.

Zum einen ist es bekannt, ein erstes Holzelement mit einem zweiten Holzelement so zu verkleben, dass die Hauptrichtung der Faserung in dem ersten Holzelement und in dem zweiten Holzelement in parallelen Ebenen liegen. Holzbauteile bestehend aus mindestens zwei so verklebten Holzelementen nennt man Brettschichtholz, Brettsperrholz oder Furniersperrholz. Die Holzelemente werden in der Regel unter Druck verklebt. So werden Stangen, z.B. Balken, aus parallel zusammengeklebten Holzschichten, z.B. Brettern, gebildet, deren Hauptrichtung der Faserung jeweils parallel zueinander angeordnet ist. Somit kann eine Holzstange oder ein Balken mit entsprechend hohen Zug und Druckkräften in Richtung der Hauptrichtung der Faserung der Bretter, bzw. der Stange, gebildet werden. Ebenfalls werden Platten oft aus einer Vielzahl von parallel verklebten Holzschichten gebildet, wobei die Hauptrichtung der Faserung von benachbarten Holzschichten in parallelen Ebenen und rechtwinkelig zueinander angeordnet sind. Somit wird eine hohe Zug- und Druckfestigkeit in den beiden Richtungen der Faserungen der Holzschichten realisiert, da in zwei orthogonalen Richtungen Faserbündel gebildet werden.

Für eine stirnseitige Verbindung von Holzelementen wird heute keine flächige Klebeverbindung wie bei Furniersperrholz verwendet, da diese Verbindung nur einen Bruchteil der Zugkräfte des Holzes in Längsrichtung der Faserung trägt und somit nicht für tragende Verbindungen verwendet werden kann. In der Regel werden hier Keilzinkenverbindungen verwendet. Dadurch wird die Verbindungsfläche erhöht und eine Klebefläche nahezu parallel zu der Faserung des Holzes geschaffen. Die Form der Zinken, der Klebstoff und der Klebevorgang sind strengen Normen unterworfen. Aufgrund dieser strengen Normen ist es nicht möglich, solche Verbindungen auf der Baustelle zu erzeugen. Andererseits ist die Grösse von Bauteilen wegen des Transports begrenzt. So dass stirnseitige Verbindungen im Holzbau wegen der Beschränkungen der Möglichkeiten auf der Baustelle und im Transport nicht klebend realisiert werden können. Zusätzlich genügt selbst diese Keilzinkenverbindung nicht den Anforderungen für Teile, die hohen Zug- und Druckkräften widerstehen müssen. Ein weiterer Nachteil der Keilzinkenverbindung oder sonstiger überlappender Verbindungen ist, dass die Überlappung oft das Einfädeln von grossen Teilen in den gewünschten Ort erschwert.

Deshalb werden für stirnseitige Verbindungen im tragenden Holzbau nur Verbindungen mit Verbindungsmitteln wie Metallgewindeschrauben oder sonstigen zusätzlichen Haltemittel aus Metall verwendet, die die hohen Druck- und Zugkräfte von einem Holzelement auf das zu verbindende zweite Holzelement übertragen können. Allerdings sind diese Teile sehr teuer in der Anschaffung, aufwendig in der Anbringung, optisch störend, konstruktiv behindernd und teilweise auch für Zulassungen, z.B. im Brandschutz, schwierig. Zusätzlich haben diese Metallelemente den Nachteil, dass diese in die beiden zu verbindenden Holzelemente eingeführt werden müssen und somit neue Schwachstellen im Holz schaffen können.

EP039356 offenbart ein Produktionsverfahren zur Erlangung von Holzplatten, mit gleichmässig dicken farbigen Klebstoffstreifen. Dazu werden Platten an der Oberseitig mit gleichmässig beabstandeten Rillen versehen, die mit farbigem Klebstoff gefüllt werden, und mit der nächsten Platte verklebt. Durch vertikales Durchsägen des Stapels entlang der Rillen, werden zweifarbige Platten erreicht. Auch in einer Plattenebene des Stapels können mehrere nebeneinander angeordnete Holzbauteile miteinander verklebt werden. Dieses Dokument bietet aber keine Lösung für das stirnseitige Verbinden zweier Holzelemente, da es keine stirnseitige Verbindung zweier Holzelemente zeigt.

FR786001 zeigt eine beabstandete Verklebung von Holzbauelementen. Dieses Dokument bietet aber keine Lösung für das stirnseitige Verbinden zweier Holzelemente, da es keine stirnseitige Verbindung zweier Holzelemente zeigt.

DE8215265U1 beschreibt ein auf Gehrung geschnittenes, gefaltetes faserparallel verklebtes Holzwerkstoffelement. Die Innenkante der Gehrungsfuge weist eine Ausnehmung auf, die die Ausbildung eines Wulsts aus ausgehärtetem Klebstoff ermöglicht. Dieses Dokument bietet allerdings ebenfalls keine Lösung für das stirnseitige Verbinden zweier Holzelemente, da es keine stirnseitige Verbindung zeigt.

WO2007/048149A1 betrifft eine Bauplatte mit Mehrschichtaufbau, die als Trägerelement eingesetzt werden kann. Die Bauplatte weist zwei zueinander parallel angeordneten Deckschichten und eine dazwischenliegende Kernschicht auf. Die Kernschicht weist zumindest eine einlagige Schrägfaserschicht. Stirnseitige Verbindungen werden hier allerdings ebenfalls nicht beschrieben.

### Darstellung der Erfindung

Es ist ein Ziel der Erfindung, ein Bauteil aus zwei stirnseitig verbundenen Holzelementen und ein Verfahren für diese Verbindung und ein Computerprogramm zur Simulierung der Belastbarkeit solcher Bauteile zu schaffen, die die Nachteile des Stands der Technik überwinden.

Erfindungsgemäss wird dieses Ziel durch ein Bauteil nach dem unabhängigen Anspruch gelöst. Das Bauteil weist ein erstes Holzelement mit zumindest einer ersten Hauptfaserrichtung und ein zweites Holzelement mit zumindest einer zweiten Hauptfaserrichtung auf. Das erste Holzelement ist an einer die erste Hauptfaserrichtung schneidenden ersten Seite mit einer die zweite Hauptfaserrichtung schneidenden ersten Seite des zweiten Holzelements verklebt.

Erfindungsgemäss wird dieses Ziel durch ein Verfahren nach dem unabhängigen Anspruch gelöst. Das Verfahren zur Verbindung eines ersten Holzelements mit einem zweiten Holzelement weist die folgenden Schritte auf. Anordnen des ersten Holzelements mit einer ersten Seite zu einer ersten Seite des zweiten Holzelements zugewandt. Verkleben der ersten Seite des ersten Holzelements mit der ersten Seite des zweiten Holzelements. Aushärten des Klebstoffs.

Erfindungsgemäss wird dieses Ziel durch ein Computerprogram nach dem unabhängigen Anspruch gelöst.

Die Erfindung hat nun den Vorteil, dass durch die stirnseitige Verklebung des ersten Holzelements mit dem zweiten Holzelement die Kräfte in der ersten Hauptfaserrichtung und zweiten Hauptfaserrichtung von den Fasern des ersten Holzelements auf die Fasern des zweiten Holzelements übertragen werden. Genauer wird die Kraft, die über die Fasern übertragen wird in die Klebstoffschicht eingeleitet. Die Klebstoffschicht leitet die eingeleitete Kraft nun an das benachbarte Holzelement weiter. Somit wird ein Bauteil durch Verbindung zweier Holzelemente geschaffen, das als tragendes Bauteil eingesetzt werden kann. Dies ermöglicht nun eine günstige Schaffung von Holzbauteilen beliebiger Grösse. Die Grösse der so herstellbaren Holzbauteile ist nicht mehr durch die Wuchsgrösse der Holzelemente oder durch maximal transportierbare Grösse beschränkt. Das Verfahren zur Verbindung ist so einfach und so stabil gegen äussere Einflüsse wie die z.B. Feuchtigkeit oder Temperatur, dass eine solche Verbindung vor Ort auf der Baustelle möglich wird. Zusätzlich beschädigt eine solche Verbindung keines der Holzelemente durch einführen von Stahlteilen. Auch eine Vergrösserung des Umfangs oder eine optische Beeinflussung des Bauteils durch ein extern angebrachtes Verbindungsmittel entfällt mit der erfindungsgemässen Technik.

Weitere vorteilhafte Ausführungsformen sind in den abhängigen Ansprüchen angegeben.

In einer Ausführungsform sind das erste Holzelement und das zweite Holzelement so angeordnet, dass zwischen der ersten Seite des ersten Holzelements und der ersten Seite des zweiten Holzelements ein Abstand besteht, der mit Klebstoff gefüllt ist. Dies erlaubt eine einfache Verklebung, die nicht verpresst werden muss.

In einer Ausführungsform ist der Abstand geeignet ist, den Spalt zwischen den beiden Holzelementen mit Klebstoff zu füllen.

In einer Ausführungsform ist der Abstand grösser als 0,3 mm.

In einer Ausführungsform bildet die klebende Verbindung zwischen dem ersten Holzelement und dem zweiten Holzelement eine tragende Verbindung zwischen dem ersten Holzelement und dem zweiten Holzelement aus. Als tragende Verbindung werden dabei Verbindungen angesehen, die im Holzbau als tragende Teile verwendet werden. Vorzugsweise hält eine solche tragende Verbindung im Holzbau mindestens eine Zugkraft von mindestens 1 Newton pro Quadratmillimeter aus. Noch besser ist es, wenn die tragende Verbindung Zugkräfte von mehr als 3 Newton pro Quadratmillimeter oder mehr als 5 Newton pro Quadratmillimeter oder mehr als 10 Newton pro Quadratmillimeter aushält. Es wurden erfindungsgemässe Verbindungen vermessen, die Zugkräfte von bis zu 20 Newton pro Quadratmillimeter aushielten.

In einer Ausführungsform schliesst die erste Hauptfaserrichtung mit der zweiten Hauptfaserrichtung einen Winkel zwischen 0° und 45° ein. Somit können Kräfte effektiv um die Kurve geleitet werden.

In einer Ausführungsform ist die erste Hauptfaserrichtung parallel zu der zweiten Hauptfaserrichtung angeordnet.

In einer Ausführungsform überlappt das erste Holzelement an der ersten Seite in der ersten Hauptfaserrichtung nicht das zweite Holzelement an der ersten Seite.

In einer Ausführungsform weist das erste Holzelement an der ersten Seite zumindest einen Bereich mit der ersten Hauptfaserrichtung auf und weist zumindest einen Bereich mit einer dritten Hauptfaserrichtung auf, und das zweite Holzelement weist an der ersten Seite zumindest einen Bereich mit der zweiten Hauptfaserrichtung auf und weist zumindest einen Bereich mit einer vierten Hauptfaserrichtung auf, wobei der Bereich des ersten Holzelements mit der ersten Hauptfaserrichtung mit dem Bereich des zweiten Holzelements mit der zweiten Hauptfaserrichtung verklebt ist. Somit können Kräfte in dem Bauteil entlang jeder Hauptfaserrichtung der beiden Holzelemente übertragen werden. Durch die Verklebung des Bereichs der ersten Hauptfaserrichtung mit dem Bereich der zweiten Hauptfaserrichtung werden die Kräfte von den Fasern des Bereichs der ersten Hauptfaserrichtung auf die Fasern des Bereichs der zweiten Hauptfaserrichtung übertragen.

In einer Ausführungsform ist der Bereich des ersten Holzelements mit der dritten Hauptfaserrichtung mit dem Bereich des zweiten Holzelements mit der vierten Hauptfaserrichtung verklebt. Durch die Verklebung des Bereichs der dritten Hauptfaserrichtung mit dem Bereich der vierten Hauptfaserrichtung werden die Kräfte von den Fasern des Bereichs der dritten Hauptfaserrichtung auf die Fasern des Bereichs der vierten Hauptfaserrichtung übertragen.

In einer Ausführungsform weist das erste Holzelement abwechselnd eine erste Holzschicht und eine zweite Holzschicht auf, wobei die erste Holzschicht an der ersten Seite dem Bereich mit der ersten Hauptfaserrichtung entspricht und die zweite Holzschicht an der ersten Seite dem Bereich mit der dritten Hauptfaserrichtung entspricht. In einer Ausführungsform weist das zweite Holzelement abwechselnd eine erste Holzschicht und eine zweite Holzschicht aufweist, wobei die erste Holzschicht an der ersten Seite dem Bereich mit der zweiten Hauptfaserrichtung entspricht und die zweite Holzschicht an der ersten Seite dem Bereich mit der vierten Hauptfaserrichtung entspricht. Eine Verklebung solcher geschichteten Furnier- oder Brettsperrholzplatten kann zu sehr grossen Platten führen, die Kräfte in den zwei Ausrichtungen der Fasern auch über die Verklebungen hinweg übertragen können. Durch die Verklebung gleich ausgerichteter Fasern werden die Kräfte in jeder Schicht über die Verklebungen hinweg übertragen.

In einer Ausführungsform ist die erste Hauptfaserrichtung rechtwinkelig zu der dritten Hauptfaserrichtung angeordnet, und/oder ist die die zweite Hauptfaserrichtung rechtwinkelig zu der vierten Hauptfaserrichtung angeordnet. Diese Anordnung hat den Vorteil, dass die beiden Richtungen der Kraftübertragung orthogonal sind und somit eine optimale Kraftübertragung in der Ebene erreicht wird.

In einer Ausführungsform ist der Bereich mit der ersten Hauptfaserrichtung parallel zu dem Bereich mit der dritten Hauptfaserrichtung ausgebildet, und/oder ist der Bereich mit der zweiten Hauptfaserrichtung parallel zu dem Bereich mit der vierten Hauptfaserrichtung ausgebildet.

In einer Ausführungsform ist das erste Holzelement eine Gridbox, und/oder ist das zweite Holzelement eine Gridbox.

In einer Ausführungsform ist die erste Seite des ersten Holzelements geschliffen oder verspachtelt, und/oder ist die erste Seite des zweiten Holzelements geschliffen oder verspachtelt. Dies hat den Vorteil, dass die zu verklebende Oberfläche vor dem Verkleben glatt ist. Dies reduziert die Wahrscheinlichkeit der Entstehung von Blasen. Blasen reduzieren die verklebte Fläche und somit die Qualität der Verbindung. Deshalb erhöht ein Schleifen oder Verspachteln der ersten Seite(n) die Qualität der Verbindung.

In einer Ausführungsform bildet der Spalt zwischen den Holzelementen eine der folgenden Formen aus: Eine ebene Fläche, eine konkave Form, einen konkave dreieckige oder mehreckige Form, eine ebene Fläche, die rechtwinkelig zu der ersten und/oder zweiten Hauptfaserrichtung angeordnet ist, eine ebene Fläche, die einen nichtorthogonalen Winkel zu der ersten und/oder zweiten Hauptfaserrichtung ausbildet. Solche Formen können dazu führen, dass sich der ausgehärtete Klebstoff in dem Spalt zusätzlich zu der Klebewirkung verkeilt.

In einer Ausführungsform bilden die erste Seite des ersten Holzelements und die erste Seite des zweiten Holzelements eine konkave Form aus, und eine Feder ist in der durch die ersten Seiten des ersten und zweiten Holzelements gebildete Hohlraum angeordnet. Durch die Feder kann die Menge des einzufüllenden Klebstoffs reduziert werden. Wenn die Festigkeit der Feder höher ist als die des Klebstoffes, erhöht sich die Festigkeit der Verbindung.

In einer Ausführungsform werden vor dem Füllen des Abstands/Spalts mit Klebstoff die offenen Seiten des Abstandes zwischen der ersten Seite des ersten Holzelements und der ersten Seite des zweiten Holzelements abgedichtet.

In einer Ausführungsform werden alle offenen Seiten des Abstands abgedichtet und der Klebstoff über ein Loch in der Abdichtung eingefüllt. Vorzugsweise gibt es ein weiteres Loch, über das die verdrängte Luft aus dem Spalt entweichen kann. Vorzugsweise ist das Loch in der Abdichtung am obersten Punkt angeordnet, so dass bis zuletzt Luft entweichen kann. Vorzugsweise wird der Klebstoff unter Druck eingefüllt. In einem Beispiel ist das Loch an der Unterseite der Abdichtung angeordnet.

In einer Ausführungsform wird die Abdichtung durch Spachtelmasse erreicht.

In einer Ausführungsform weist der Klebstoff zwei Komponenten auf, die vor dem oder beim Einfüllen in den Abstand vermischt werden.

In einer Ausführungsform wird das zwischen den ersten Seiten des ersten und zweiten Holzelements eingeschlossene Volumen berechnet, das Volumen des eingefüllten Klebstoffs gemessen wird, das berechnete Volumen mit dem gemessenen Volumen verglichen wird, und eine Aussage über die Qualität der Verbindung auf der Basis des Vergleichs getroffen. Der Ablauf erlaubt eine sehr einfache und effektive Kontrolle der Qualität der Verbindung.

In einer Ausführungsform wird das zwischen den ersten Seiten des ersten und zweiten Holzelements eingeschlossene Volumen in untereinander abgedichtete Untervolumen unterteilt, das zwischen den ersten Seiten des ersten und zweiten Holzelements eingeschlossene Volumen eines ersten Untervolumens berechnet wird, das Volumen des in das erste Untervolumen eingefüllten Klebstoffs gemessen wird, das berechnete Volumen mit dem gemessenen Volumen verglichen wird, und eine Aussage über die Qualität der Verbindung in dem ersten Untervolumen auf der Basis des Vergleichs getroffen. Durch die zusätzliche Unterteilung der Abschnitte ist eine ortsgenaue Bestimmung der Schwachstellen in grossen zu verklebenden Flächen möglich.

### Kurze Beschreibung der Figuren

Die Erfindung wird anhand der beigefügten Figuren näher erläutert, wobei zeigen
- **Fig. 1**: ein erstes Ausführungsbeispiel eines Bauteils;
- **Fig. 2**: das erste Ausführungsbeispiel eines Bauteils;
- **Fig. 3**: eine zweites Ausführungsbeispiel eines Bauteils;
- **Fig. 4**: ein drittes Ausführungsbeispiel eines Bauteils;
- **Fig. 5**: ein Ausführungsbeispiel eines Holzelements des Bauteils des dritten Ausführungsbeispiels;
- **Fig. 5A**: ein Schnitt durch das Bauteil des dritten Ausführungsbeispiels;
- **Fig. 6**: ein viertes Ausführungsbeispiel eines Bauteils;
- **Fig. 6A**: eine weiteres Ausführungsbeispiel eines Bauteils;
- **Fig. 7**: ein fünftes Ausführungsbeispiel eines Bauteils;
- **Fig. 8**: ein Schnitt durch das fünfte Ausführungsbeispiel eines Bauteils;
- **Fig. 9**: ein sechstes Ausführungsbeispiel eines Bauteils;
- **Fig. 10**: ein siebtes Ausführungsbeispiel eines Bauteils;
- **Fig. 11A**: ein achtes Ausführungsbeispiel eines Bauteils;
- **Fig. 11B**: ein neuntes Ausführungsbeispiel eines Bauteils;
- **Fig. 11C**: ein zehntes Ausführungsbeispiel eines Bauteils;
- **Fig. 11D**: ein elftes Ausführungsbeispiel eines Bauteils;
- **Fig. 11E**: ein zwölftes Ausführungsbeispiel eines Bauteils;
- **Fig. 12**: ein Ausführungsbeispiel eines Verfahrens zum Verkleben zweier Holzelemente; und
- **Fig. 13**: ein Ausführungsbeispiel eines Verfahrens zur Qualitätssicherung der Verklebung zweier Holzelemente.

### Wege zur Ausführung der Erfindung

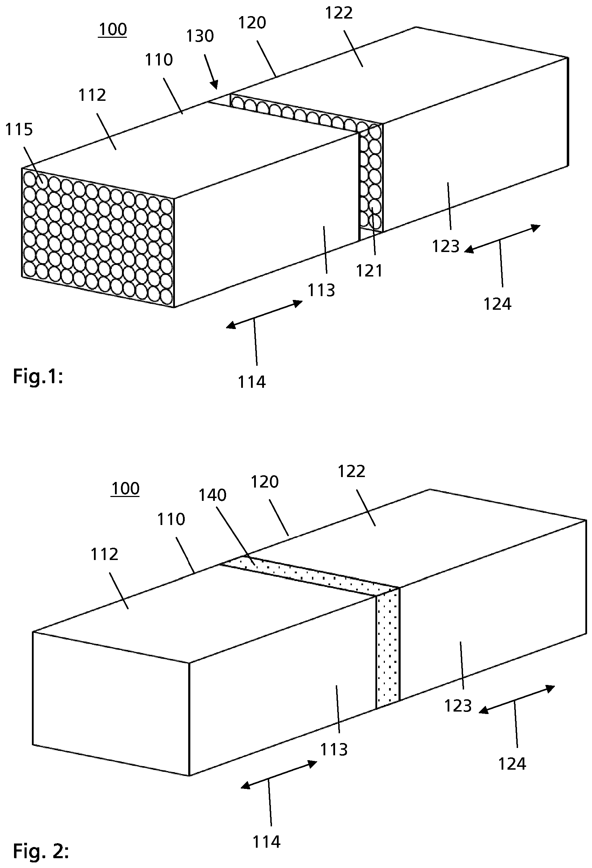

Fig. 1 zeigt ein erstes Ausführungsbeispiel eines Bauteils 100. Das Bauteil 100 weist ein erstes Holzelement 110 und eine zweites Holzelement 120 auf.

Das erste Holzelement 110 weist eine erste zu dem zweiten Holzelement 120 gewandte, nicht dargestellte Seite, eine zweite zu der ersten und einer dritten Seite rechtwinkelige Seite 112 und die dritte zu der ersten und der zweiten rechtwinkelige Seite 113 auf. Eine vierte, nicht dargestellte Seite ist auf der zu der zweiten Seite 112 gegenüberliegenden Seite des Holzelements 110 parallel zu der zweiten Seite 112 angeordnet. Eine fünfte, nicht dargestellte Seite ist auf der zu der dritten Seite 113 gegenüberliegenden Seite des Holzelements 110 parallel zu der dritten Seite 113 angeordnet. So formt das Holzelement 110 einen Quader. Allerdings ist die Erfindung nicht auf Holzelemente in Quaderform beschränkt, sondern jede geometrische und nicht geometrische Form, mit einer ersten Seite zum Verkleben mit dem zweiten Holzelement ist als erstes Holzelement geeignet. Das erste Holzelement 110 weist Fasern 115, die in Figur 1 als Rohre stilisiert gezeichnet sind, auf. Die Fasern 115 in dem Holzelement 110 zeigen in die Hauptfaserrichtung 114, die parallel zu der zweiten Seite 112 und dritten Seite 113 zeigt und orthogonal auf der ersten Seite steht. Die Hauptfaserrichtung 114 steht vorzugsweise rechtwinkelig auf der ersten Seite, die hier als ebene Fläche ausgebildet ist, während die Ausrichtung der Hauptfaserrichtung 114 zu den anderen Seiten ohne Relevanz für die Erfindung ist. Aber auch andere Winkel zwischen der Hauptfaserrichtung 114 und der ersten Seite sind möglich.

Das zweite Holzelement 120 weist eine erste Seite 121, eine zweite Seite 122, eine dritte Seite 123 und eine Hauptfaserrichtung 124 auf. In dem Bauteil 100 ist das zweite Holzelement 120 zumindest in der Grundstruktur identisch zu dem bereits beschriebenen ersten Holzelement 110, so dass eine erneute Beschreibung vermieden wird.

In dem Bauteil 100 werden das erste Holzelement 110 und das zweite Holzelement 120 so angeordnet, dass die erste Seite des ersten Holzelements 110 parallel zu ersten Seite 121 des zweiten Holzelements 120 angeordnet ist. In dem Bauteil 100 ist die erste Seite des ersten Holzelements 110 gleich gross wie die erste Seite 121 des zweiten Holzelements 120, und das erste Holzelement 110 und das zweite Holzelement 120 werden so angeordnet, dass das erste Holzelement 110 bündig zu dem zweiten Holzelement 120 angeordnet wird, d.h. dass die erste Seite des ersten Holzelements 110 nicht über die erste Seite 121 des zweiten Holzelements 120 übersteht. Allerdings ist die Erfindung nicht auf solche bündige Verbindungen beschränkt.

Das erste Holzelement 110 wird zu dem zweiten Holzelement 120 so angeordnet, dass zwischen der ersten Seite des ersten Holzelements 110 und der ersten Seite 121 des zweiten Holzelements 120 ein Abstand besteht. Der Abstand sollte gross genug sein, so dass ein verwendeter Klebstoff in den durch den Abstand zwischen der ersten Seite des ersten Holzelements 110 und der ersten Seite 121 des zweiten Holzelements 120 gebildete Spalt eingebracht werden kann. Der Spalt sollte geeignet sein, dass der Klebstoff sich im gesamten Spaltvolumen ausbreiten und dieses verfüllen können muss, bevor er anfängt, auszuhärten. Eine obere Grenze für den Abstand gibt es nicht. Untersuchungen von Klebstoffverbindungen mit verschiedenen Abständen hat gezeigt, dass die Kraft pro Fläche der Verbindung zwischen dem ersten Holzelement 110 und dem zweiten Holzelement 120 nicht von der Grösse des Abstands abhängt, sofern der Spalt mit Klebstoff gefüllt ist. Dies bedeutet erstens, dass es keine obere Grenze für die Grösse des Spalts gibt. Des weiteren ist es für die Klebeverbindung der Erfindung nicht relevant, dass die erste Seite des ersten Holzelements 110 und die erste Seite 121 des zweiten Holzelements 120 parallel ist. Die beiden ersten Seiten könnten in einem alternativen Bauteil auch mit einem Winkel angeordnet werden, so dass der Abstand zwischen den beiden ersten Seiten in eine Richtung ansteigt und das erste Holzelement 110 einen Winkel mit dem zweiten Holzelement 120 einschliesst. Tests bis zu 45° zwischen der ersten Hauptfaserrichtung 114 und der zweiten Hauptfaserrichtung 124 zeigten dabei zufriedenstellende Resultate. Anders als in Holzklebeverbindungen des Stands der Technik, wird in der Erfindung der Klebstoff eingefüllt, während im Stand der Technik die Verbindung durch ein Zusammenpressen der beiden Holzelemente und erreicht wird. Solche Pressverbindungen dürfen keine Abstände grösser als 0,3 mm aufweisen. Hingegen ist es für die Erfindung gerade von Vorteil, wenn der Abstand zwischen dem ersten Holzelement 110 und dem zweiten Holzelement 120 grösser als 0,3 mm ist. Insbesondere bei kalten Temperaturen ist es von Vorteil, wenn der Abstand grösser ist, vorzugsweise grösser als 1 mm, noch besser grösser als 3 oder 5 mm.

Fig. 2 zeigt ebenfalls das Bauteil 100 des ersten Ausführungsbeispiels. Die Fasern 115 sind in Fig. 2 nicht mehr gezeigt, aber trotzdem vorhanden. In Fig. 2 ist nun der Spalt 130 mit Klebstoff 140 gefüllt, der eine tragende Verbindung zwischen dem ersten Holzelement 110 und dem zweiten Holzelement 120 schafft. Zum Verkleben des ersten Holzelements 110 mit dem zweiten Holzelement 120, werden die in Fig. 1 gezeigten offenen Seiten des Spalts 130 abgedichtet. Dies wird zum Beispiel durch ein Verspachteln der offenen Seiten erreicht. Durch eine kleine Öffnung in der Spachtelmasse wird der Klebstoff in den Spalt gefüllt. Der Klebstoff kann auch unter leichten Druck in den Spalt 130 gedrückt werden, so dass evtl. in Richtung der Erdanziehung oberhalb der Öffnung liegende Bereiche des Spalts 130 noch mit Klebstoff gefüllt werden können. Als Klebstoff wird vorzugsweise ein Zweikomponentenklebstoff verwendet, dessen zwei Komponenten beim Einfüllen in den Spalt 130 gemischt werden. Durch das Mischen der zwei Komponenten beginnt der Klebstoff auszuhärten. Nach dem Aushärten des Klebstoffs besteht eine tragende Verbindung zwischen dem ersten Holzelement 110 und dem zweiten Holzelement 120. Als Klebstoff wurde zum Beispiel der Klebstoff PURBOND CR 421 der schweizerischen Firma Purbond getestet. Dieses Zwei-Komponenten-Polyurethan-Giessharz ist vom Deutschen Institut für Bautechnik unter der Zulassungsnummer Z-9.1-707 zum Einkleben von Stahlstäben in tragende Holzbauteile zugelassen. Mit diesem Klebstoff wurde eine Verbindung zwischen dem ersten Holzelement 110 und dem zweiten Holzelement 120 mit Zugfestigkeiten von bis zu 20 Newton pro Quadratmillimeter (N/mm²) gemessen.

In einer Abwandlung des Bauteils 100 wurden die erste Seite des ersten Holzelements 110 und die erste Seite des zweiten Holzelements 120 vor dem Verkleben abgeschliffen, so dass die zu verklebenden Flächen glatt sind. So wird eine Blasenbildung in dem Klebstoff verhindert und die verklebte Fläche vergrössert, so dass eine höhere Belastbarkeit der Verbindung erreicht wird. Alternativ kann die Blasenbildung auch durch eine Verspachtelung der zu verklebenden Flächen verhindert werden. Eine solche Abwandlung ist nicht nur für das Bauteil 100, sondern auch für die nachfolgend beschriebenen Ausführungsbeispiele des Bauteils und hier nicht beschriebene Ausführungsbeispiele der Erfindung geeignet.

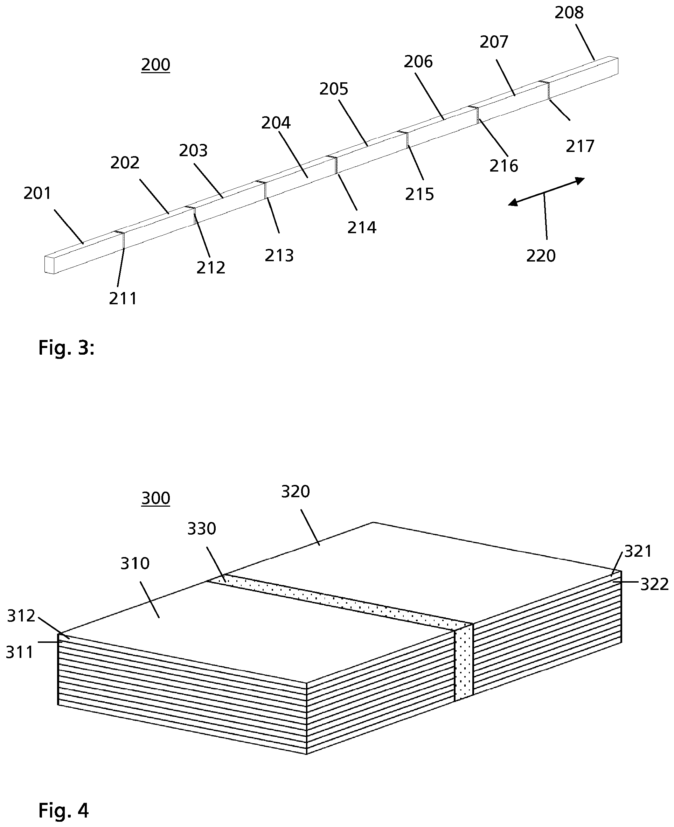

Fig. 3 zeigt eine Stange 200 als zweites Ausführungsbeispiel eines Bauteils. Die Stange 200 weist acht Holzelementen 201, 202, 203, 204, 205, 206, 207, 208 auf. Jedes Holzelement hat eine Hauptfaserrichtung 220. Jedes Holzelement ist vorzugsweise als Quader ausgebildet. In diesem Beispiel ist die längste Seite des Quaders in Richtung der Hauptfaserrichtung 220 ausgebildet. Die in der Mitte angeordneten Holzelemente 202 bis 207 sind jeweils an deren Enden in Hauptfaserrichtung 220 mit einer Klebstoffverbindung 211 bis 217, wie sie in Fig. 1 und 2 beschrieben wurde, mit dem jeweils benachbarten Holzelement 201 bis 208 verbunden. So lässt sich durch die erfindungsgemässe Verbindung eine Stange beliebiger Länge erzeugen, deren Hauptfaserrichtung in Längsrichtung der Stange verläuft. Durch die Verklebungen an den Enden eines jeden Holzelements 201 bis 208 wird die Kraft der Fasern auf die Fasern der benachbarten Holzelemente übertragen. Gleichzeitig müssen die einzelnen Holzelemente 201 bis 208 nicht durch das Einführen eines Eisenelements geschwächt werden oder der Umfang durch externe Verbindungselemente vergrössert werden. Die Verklebung ist einfach und kann auch vor Ort auf der Baustelle stattfinden. Deshalb können die Holzelemente 201 bis 208 in transportabler Grösse zu der Baustelle transportiert werden und dort zu der Stange der gewünschten Grösse zusammengeklebt werden. Die Verklebung hat auch bei Aushärtungen bei -10° C noch sehr gute Belastungswerte ergeben, so dass diese Verklebung selbst im Winter möglich wäre.

Die Holzelemente 110 und 120 aus Fig. 1 und 2 und die Holzelemente 201 bis 208 aus Fig. 3 haben jeweils eine Hauptfaserrichtung. Die Holzelemente 110, 120, 201 bis 208 können als einstückiges Holz, z.B. aus Vollholz bzw. Brettschichtholz oder als Furnier-, Brettsperr-, Grobspanholz realisiert sein. In dem Furnier- bzw. Brettsperrholz können Holzbalken oder Holzbretter parallel zu deren Hauptfaserrichtung verklebt werden, die zusammen ein Holzelement 110, 120, 201 bis 208 bilden.

Fig. 4 zeigt ein drittes Ausführungsbeispiel eines Bauteils 300. Das Bauteil 300 weist ein erstes Holzelement 310 und ein zweites Holzelement 320 auf. Das erste Holzelement 310 ist an einer ersten Seite mit einer ersten Seite des zweiten Holzelements 320 mit einer Klebstoffschicht 330 verklebt, wie es in Fig. 1 und 2 im Zusammenhang mit dem Bauteil 100 beschrieben ist.

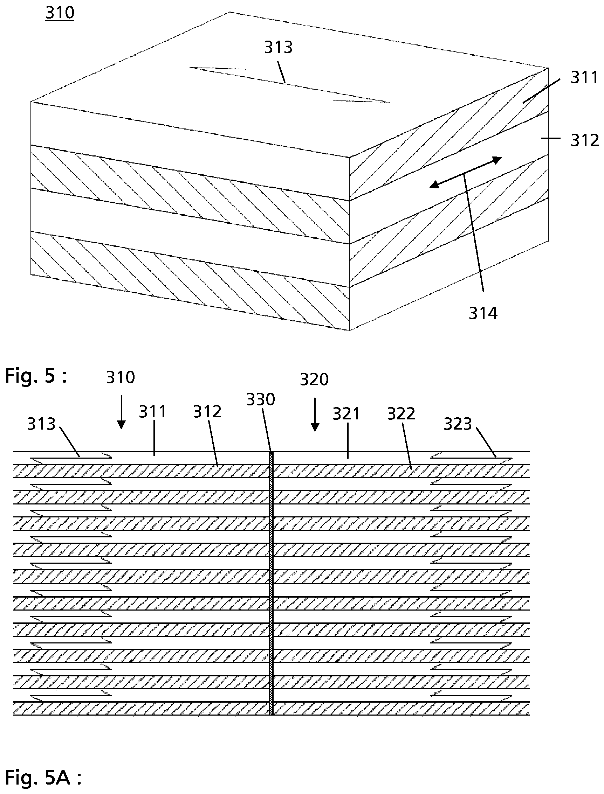

In diesem Ausführungsbeispiel weist das erste Holzelement 310 weist eine Mehrzahl von ersten Holzschichten 311 und eine Mehrzahl von zweiten Holzschichten 312 auf, wobei eine benachbarte Holzschicht einer ersten Holzschicht 311 eine zweite Holzschicht 312 ist und umgekehrt, so dass sich die erste Holzschicht und die zweite Holzschicht 312 in dem Holzelement 310 immer abwechseln. Fig. 5 zeigt exemplarisch vier Schichten des ersten Holzelements 310. Die erste Holzschicht 311 weist eine erste Hauptfaserrichtung 313 auf, die zweite Holzschicht 312 eine dritte Hauptfaserrichtung 314 auf, welche vorzugsweise rechtwinkelig auf der ersten Hauptfaserrichtung 313 steht. Beide Hauptfaserrichtungen 313 und 314 sind in der Ebene der Schichten angeordnet. Die erste Hauptfaserrichtung 313 oder die dritte Hauptfaserrichtung 314 ist vorzugsweise senkrecht zu der ersten Seite des ersten Holzelements 310 angeordnet. Alternativ kann die erste Hauptfaserrichtung 313 oder die dritte Hauptfaserrichtung 314 auch in einem anderen Winkel zwischen 90° und 45° zu der ersten Seite des ersten Holzelements 310 angeordnet sein.

Fig. 5A zeigt einen Schnitt durch das Bauteil 300, der senkrecht auf dem verklebten Spalt 330 steht. Das zweite Holzelement 320 weist ebenfalls eine Mehrzahl von ersten Holzschichten 321 und eine Mehrzahl von zweiten Holzschichten 322 auf, wobei eine benachbarte Schicht einer ersten Holzschicht 321 eine zweite Holzschicht 322 ist und umgekehrt, so dass sich die erste Holzschicht 321 und die zweite Holzschicht 322 in dem zweiten Holzelement 320 immer abwechseln. Die erste Holzschicht 321 weist eine zweite Hauptfaserrichtung 323 auf, und die zweite Holzschicht 322 weist eine vierte Hauptfaserrichtung auf, welche rechtwinkelig auf der zweiten Hauptfaserrichtung 323 steht. Beide Hauptfaserrichtungen des zweiten Holzelements 320 sind in der Ebene der Schichten angeordnet. Die zweite Hauptfaserrichtung 323 oder die vierte Hauptfaserrichtung ist vorzugsweise senkrecht zu der ersten Seite des zweiten Holzelements 320 angeordnet. Alternativ kann die zweite Hauptfaserrichtung 313 oder die vierte Hauptfaserrichtung 314 auch in einem Winkel zwischen 90° und 45° zu der ersten Seite des ersten Holzelements 320 angeordnet sein.

Das erste Holzelement 310 und das zweite Holzelement 320 werden nun vorzugsweise so angeordnet, dass die ersten Schichten 311 des ersten Holzelements 310 mit den ersten Schichten 321 des zweiten Holzelements 320 verklebt werden und die zweiten Schichten 312 des ersten Holzelements 310 mit den zweiten Schichten 322 des zweiten Holzelements 320 verklebt werden. Das bedeutet, dass die Projektion einer ersten Schicht 311 des ersten Holzelements 310 in der Ebene der Schicht wieder auf eine erste Schicht 321 des zweiten Holzelements 320 trifft. Das gleiche gilt für die zweite Schichten 312 und 322. Die erste Hauptfaserrichtung 313 und die zweite Hauptfaserrichtung 323 sind vorzugsweise parallel und die dritte Hauptfaserrichtung 314 und die vierte Hauptfaserrichtung sind vorzugsweise ebenfalls parallel. Somit wird in jeder Schicht die Hauptfaserrichtung über benachbarte Holzelemente 310 und 320 beibehalten, und somit werden Zug- und Druckkräfte optimal in Faserrichtung über benachbarte Holzelemente 310 und 320 übertragen. Aufgrund der rechtwinkelig angeordneten Hauptfaserrichtungen in benachbarten Holzschichten kann jedes Holzelement 310 und 320 in zwei orthogonale Richtungen Kräfte übertragen. Durch die Fortführung der Faserrichtungen in jeder Schicht in dem benachbarten Holzelement 310 und 320 über die Klebstoffschicht 330 kann somit das Bauteil 300 trotz der klebenden Verbindung Kräfte in zwei orthogonale Richtungen über das ganze Bauteil aushalten.

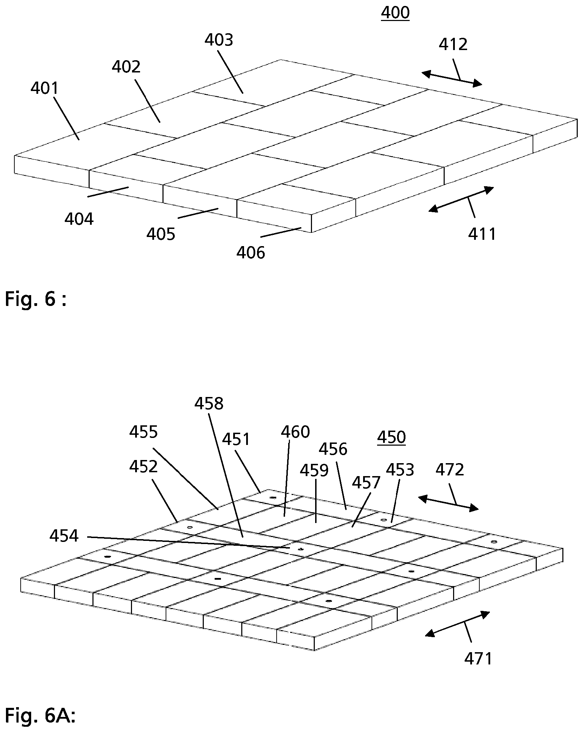

Fig. 6 zeigt nun die Möglichkeit Platten beliebiger Grösse als viertes Ausführungsbeispiel eines Bauteils 400 zu bilden, die in zwei orthogonalen Richtungen Kräfte übertragen können. Jedes Holzelement 401, 402, 403, 404, 405, 406 ... weist einen Schichtaufbau wie die Holzelemente 310 und 320 auf. Jedes Holzelement 401, 402, 403, 404, 405, 406 ... weist jeweils alternierend eine erste Schicht und eine zweite Schicht auf. In der ersten Schicht besteht eine erste Hauptfaserrichtung 411, die senkrecht zu einer zweiten Hauptfaserrichtung 412 in der zweiten Schicht angeordnet ist. Die ersten Schichten eines Holzelements 401, 402, 403, 404, 405, 406 ... sind mit den entsprechenden ersten Schichten der benachbarten Holzelemente verklebt, und die zweiten Schichten entsprechend mit den zweiten Schichten. Dadurch werden in jeder ersten Schicht Kräfte in Richtung der ersten Hauptfaserrichtung 411 über die Holzelemente 401, 402, 403, 404, 405, 406 ... hinweg übertragen. Gleichzeitig werden in den zweiten Schichten Kräfte in Richtung der zweiten Hauptfaserrichtung 412 über die Holzelemente 401, 402, 403, 404, 405, 406 ... hinweg übertragen. Somit kann eine Platte 400 beliebiger Grösse hergestellt werden, die Kräfte in zwei orthogonale Richtungen 411 und 412 gut übertragen kann.

Fig. 6A zeigt nun weiteres Ausführungsbeispiel eines Bauteils 450. Das Bauteil 450 bildet ebenfalls wie das Bauteil 400 eine Platte aus, die in zwei orthogonalen Richtungen Kräfte übertragen kann. Jedes Holzelement 451, 452, 453, 454, 455, 456 ... weist einen Schichtaufbau wie die Holzelemente 310 und 320 auf. Jedes Holzelement 451, 452, 453, 454, 455, 456 ... weist jeweils alternierend eine erste Schicht und eine zweite Schicht auf. In der ersten Schicht besteht eine erste Hauptfaserrichtung 471, die senkrecht zu einer zweiten Hauptfaserrichtung 472 in der zweiten Schicht angeordnet ist. Die ersten Schichten eines Holzelements 451, 452, 453, 454, 455, 456 ... sind mit den entsprechenden ersten Schichten der benachbarten Holzelemente verklebt, und die zweiten Schichten entsprechend mit den zweiten Schichten. Dadurch werden in jeder ersten Schicht Kräfte in Richtung der ersten Hauptfaserrichtung 471 über die Holzelemente 451, 452, 453, 454, 455, 456 ... hinweg übertragen. Gleichzeitig werden in den zweiten Schichten Kräfte in Richtung der zweiten Hauptfaserrichtung 472 über die Holzelemente 451, 452, 453, 454, 455, 456 ... hinweg übertragen. Somit kann eine Platte 450 beliebiger Grösse hergestellt werden, die Kräfte in zwei orthogonale Richtungen 471 und 472 gut übertragen kann.

Das Bauteil 450 eignet sich besonders gut als Geschossdecke. So liegen die als Stützenköpfe bezeichneten Holzelemente 451, 452, 453, 454 und die nicht nummerierten Holzelemente mit der Ausnehmung jeweils auf einer Stütze auf. Zwischen zwei Stützenköpfen befindet sich ein Holzelement 455, 456, 457, 458, etc. welches als erstes Nebentragwerk bezeichnet wird. Zwischen zwei Holzelementen 455, 456, 457, 458, etc. des ersten Nebentragwerks befindet sich das zweite Nebentragwerk. Das zweite Nebentragwerk zwischen vier Holzelementen 455, 456, 457, 458, etc. des ersten Nebentragwerks weist zwei Holzelemente 459 und 460 auf. Da die Kräfte von dem zweiten Nebentragwerk auf das erste Nebentragwerk, von dem ersten Nebentragwerk auf die Stützenköpfe und von dort auf die Stützen übertragen wird, sind die Stützenköpfe höheren Kräften ausgesetzt als das erste Nebentragwerk und das erste Nebentragwerk ist höheren Kräften ausgesetzt als das zweite Nebentragwerk. Deshalb kann es von Vorteil sein, für Stützenköpfe, erstes Nebentragwerk und zweites Nebentragwerk jeweils unterschiedliches Holz zu verwenden mit unterschiedlichen maximalen Belastungen.

Dadurch dass in der ersten Schicht eines jeden Holzelements 451, 452, 453, 454, 455, 456, 457, 458, 459, 460, ... des Bauteils 450 immer die erste Hauptfaserrichtung 471 vorliegt und in der zweiten Schicht eines jeden Holzelements 451, 452, 453, 454, 455, 456, 457, 458, 459, 460, ... des Bauteils 450 immer die zweite Hauptfaserrichtung 472 vorliegt, werden die Kräfte jeder Schicht über die Klebstoffverbindungen der angrenzenden Holzelemente 451, 452, 453, 454, 455, 456, 457, 458, 459, 460, ... über die ganze Platte geleitet. Somit wird ein Bauteil geschaffen, dass eine ähnliche Stabilität hat wie ein Vollholz, das Fasern in zwei Richtungen hat und eine Platte beliebiger Grösse bildet.

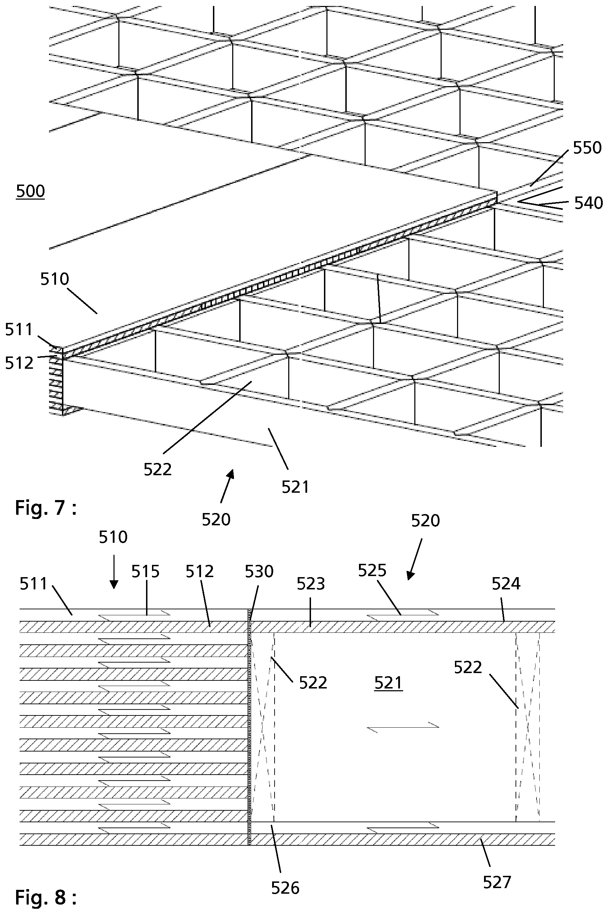

Fig. 7 und Fig. 8 zeigen ein fünftes Ausführungsbeispiel eines Bauteils 500 aufweisend ein erstes Holzelement 510, ein zweites Holzelement 520, ein drittes Holzelement 540 und ein viertes Holzelement 550 auf. Fig. 7 zeigt eine dreidimensionale Ansicht des Bauteils 500. Fig. 8 zeigt einen Schnitt durch die zwei Holzelemente 510 und 520 in dem Bauteil 500. Im Gegensatz zu dem ersten bis vierten Ausführungsbeispiel sind hier das erste Holzelement 510 und das zweite Holzelement 520 nicht gleich aufgebaut.

Das erste Holzelement 510 weist einen Schichtaufbau mit abwechselnd angeordneten ersten Holzschichten 511 und zweiten Holzschichten 512 mit orthogonalen ersten Hauptfaserrichtungen 515 und dritten Hauptfaserrichtungen wie die Holzelemente 310, 320, 401, 402, 403, ... auf.

Das zweite Holzelement 520 weist einen kastenförmigen Aufbau auf. Das zweite Holzelement 520 weist erste Querstreben 521 und zweite Querstreben 522, die rechtwinkelig zu den ersten Querstreben 521 angeordnet sind, auf. Die ersten Querstreben 521 und die zweiten Querstreben 522 werden auch als Querschotten bezeichnet. Somit wird eine stabile und leichte Kastenstruktur, auch Gridbox genannt, erzeugt. Die Gridbox wird auf einer Oberseite durch eine zweite Holzschicht 523 abgedeckt, die in Fig. 7 nicht dargestellt ist, aber in Fig. 8 zu sehen ist. Die zweite Holzschicht 523 weist eine vierte Hauptfaserrichtung in die Bildebene von Fig. 8 auf und somit parallel zu der Klebeschicht 530 zwischen dem ersten und dem zweiten Holzelement 510 und 520. Auf der zweiten Holzschicht 523 können weitere Holzschichten angeordnet sein, wobei die benachbarte Holzschicht jeweils eine in der Schichtebene orthogonale Hauptfaserrichtung aufweist. In dem Bauteil 500 ist eine erste Holzschicht 524 auf der zweiten Holzschicht 523 angeordnet, die eine zweite Hauptfaserrichtung 525 aufweist, die senkrecht zu der Klebeschicht 530 angeordnet ist. Die Gridbox wird auf einer Unterseite durch eine weitere erste Holzschicht 526 abgedeckt, die in Fig. 7 nicht dargestellt ist, aber in Fig. 8 zu sehen ist. Die erste Holzschicht 526 weist die zweite Hauptfaserrichtung 525 auf, die parallel zu der ersten Hauptfaserrichtung 515 und senkrecht zu der dritten und vierten Hauptfaserrichtung ist. Auf der weiteren ersten Holzschicht 526 können weitere Holzschichten angeordnet sein, wobei die benachbarte Holzschicht jeweils eine orthogonale Hauptfaserrichtung aufweist. In dem Bauteil 500 ist eine weitere zweite Holzschicht 527 auf der weiteren ersten Holzschicht 526 angeordnet, die die vierte Hauptfaserrichtung aufweist. Die ersten Querstreben 521 weisen die zweite Hauptfaserrichtung 525 auf. Die zweiten Querstreben 522 weisen die vierte Hauptfaserrichtung auf.

Die Kastenstruktur des zweiten Holzelements 520 hat den Vorteil, dass das Holzelement 520 materialsparender und leichter ist. Ein solches Holzelement 520 ist vor allem vorteilhaft, wenn eine niedrigere Kraft übertragen werden muss. Die Kräfte auf das Holzelement 520 werden durch die ersten Querstreben 521 und durch die ersten Holzschichten 524 und 526 in der ersten Hauptfaserrichtung übertragen und im Bereich der ersten Schichten 511 des ersten Holzelements 510 auf das erste Holzelement 510 übertragen. Gleichzeitig werden Kräfte in die zweite Hauptfaserrichtung über die zweiten Holzschichten 523 und 526 auf die zweiten Holzschichten eines benachbarten Holzelements 540 übertragen. Das benachbarte Holzelement 540 ist aufgebaut wie das zweite Holzelement 520. Somit können in diesem Ausführungsbeispiel Kräfte in zwei orthogonale Richtungen übertragen werden. In diesem Ausführungsbeispiel ist die Hauptfaserung der zweiten Querstreben 522 unterbrochen, da die zweiten Querstreben nicht direkt mit den zweiten Querstreben 522 des benachbarten Holzelements 540 verklebt werden.

In dem Bauteil 500 gibt es Bereiche der ersten Seite des ersten Holzelements 510 mit der ersten Hauptfaserrichtung 515, die mit Bereichen der ersten Seite des zweiten Holzelements 520 mit der zweiten Hauptfaserrichtung 525 verklebt sind. Hierzu zählen z.B. die ersten Schichten 511 des ersten Holzelements 510, die mit ersten Schichten 524 und 526 des zweiten Holzelements 520 verklebt sind. Dazu zählt auch der Bereich der ersten Holzschichten 511 des ersten Holzelements 510, die mit den Enden der ersten Querstreben 521 verklebt sind. In dem Bauteil 500 gibt es Bereiche der ersten Seite des ersten Holzelements 510 mit der dritten Hauptfaserrichtung, die mit Bereichen der ersten Seite des zweiten Holzelements 520 mit der vierten Hauptfaserrichtung verklebt sind. Hierzu zählen z.B. die zweiten Schichten 512 des ersten Holzelements 510, die mit zweiten Schichten 523 und 527 des zweiten Holzelements 520 verklebt sind. Dazu zählt auch der Bereich der zweiten Holzschichten 512 des ersten Holzelements 510, die mit den Seiten der zweiten Querstreben 522 verklebt sind. Aufgrund des unterschiedlichen Aufbaus gibt es schliesslich Bereiche der ersten Seite des ersten Holzelements 510 mit der ersten Hauptfaserrichtung 515, die mit Bereichen der ersten Seite des zweiten Holzelements 520 mit der vierten Hauptfaserrichtung verklebt sind. Dazu zählt der Bereich der ersten Holzschichten 511 des ersten Holzelements 510, die mit den Seiten der zweiten Querstreben 522 verklebt sind. Über diese verklebten Bereiche mit rechtwinkelig zueinander angeordneten Hauptfaserbereichen wird keine Kraft übertragen. Aufgrund des unterschiedlichen Aufbaus gibt es schliesslich Bereiche der ersten Seite des ersten Holzelements 510 mit der dritten Hauptfaserrichtung, die mit Bereichen der ersten Seite des zweiten Holzelements 520 mit der zweiten Hauptfaserrichtung 525 verklebt sind. Dazu zählt der Bereich der zweiten Holzschichten 512 des ersten Holzelements 510, die mit den Enden der ersten Querstreben 521 verklebt sind. Über diese verklebten Bereiche mit rechtwinkelig zueinander angeordneten Hauptfaserbereichen wird keine Kraft übertragen.

Das dritte Holzelement 540 und das vierte Holzelement 550 sind wie das zweite Holzelement 520 aufgebaut. Das vierte Holzelement 550 ist mit dem ersten Holzelement 510 verklebt analog zu dem zweiten Holzelement. Das dritte Holzelement 540 ist mit dem zweiten Holzelement 520 und dem vierten Holzelement 550 verklebt.

Unterschiedlich aufgebaute Holzelemente 510 und 520, 540, 550 ergeben in Situationen Sinn, wie in Fig. 7 dargestellt, in denen die Kräfte mehrerer Holzelemente 520, 540, 550 über ein Holzelement 510 abtransportiert werden muss, z.B. zu einen Träger, der unter dem Holzelement 510 angeordnet ist. Deshalb müssen die Holzelemente 520, 540 und 550 weniger Kraft übertragen als das erste Holzelement 510. Deshalb ist hier das erste Holzelement 510 massiv als Furniersperrholz realisiert, während die weiteren Holzelemente 520, 540 und 550 als Gridbox realisiert sind.

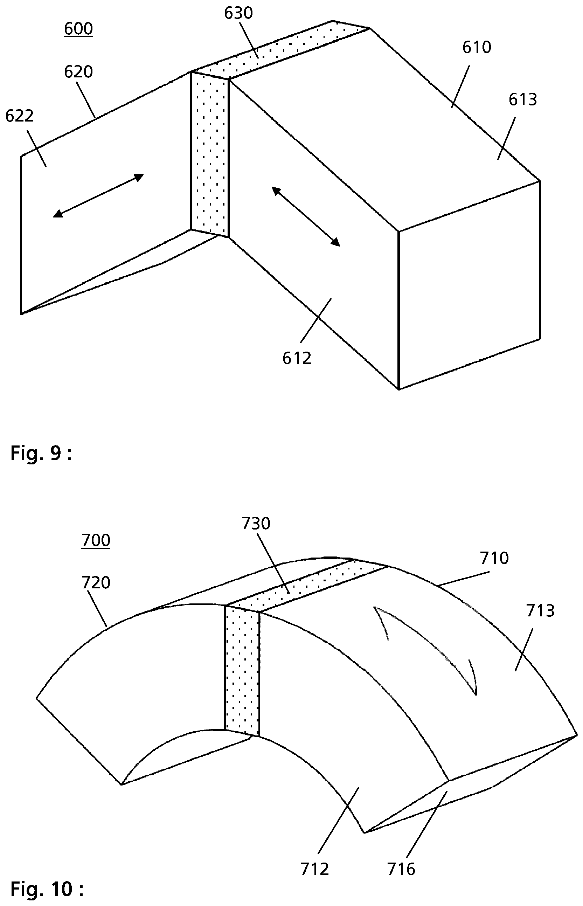

Fig. 9 zeigt ein sechstes Ausführungsbeispiel eines Bauteils 600. Das Bauteil 600 weist ein erstes Holzelement 610 und eine zweites Holzelement 620 auf.

Das erste Holzelement 610 weist eine erste, nicht sichtbare Seite, eine zweite Seite 612 und eine dritte Seite 613 auf. Die zweite und dritte Seite 612 und 613 sind rechtwinkelig zueinander angeordnet und eine erste Hauptfaserrichtung in dem ersten Holzelement 610 ist parallel zu der zweiten und dritten Seite 612 und 613 angeordnet. Die erste Seite des ersten Holzelements weist einen nicht orthogonalen Winkel zu zumindest einer der zweiten Seite 612 und der dritten Seite 613 auf. In diesem Bauteil 600 ist die erste Seite rechtwinkelig zu der zweiten Seite 612 und weist einen nicht orthogonalen Winkel mit der dritten Seite 613 auf. Somit entspricht der Winkel zwischen der ersten und dritten Seite dem Winkel zwischen der ersten Seite und der ersten Hauptfaserrichtung.

Das zweite Holzelement 620 weist eine erste, nicht sichtbare Seite, eine zweite Seite 622 und eine dritte, ebenfalls nicht sichtbare Seite auf. Die zweite und dritte Seite 622 sind rechtwinkelig zueinander angeordnet und eine zweite Hauptfaserrichtung in dem zweiten Holzelement 620 ist parallel zu der zweiten und dritten Seite 612 und 613 angeordnet. Die erste Seite des zweiten Holzelements 620 weist einen nicht orthogonalen Winkel zu zumindest einer der zweiten Seite 612 und der dritten Seite 613 auf. In diesem Bauteil 600 ist die erste Seite rechtwinkelig zu der zweiten Seite 622 und weist einen nicht orthogonalen Winkel mit der dritten Seite auf. In diesem Ausführungsbeispiel ist der Winkel wie in dem ersten Holzelement 610 ausgebildet. Somit entspricht der Winkel zwischen der ersten und dritten Seite dem Winkel zwischen der ersten Seite und der zweiten Hauptfaserrichtung.

Die ersten Seiten des ersten Holzelement 610 und des zweiten Holzelements 620 werden wie im Zusammenhang mit Fig. 1 und 2 und dem Bauteil 100 erläutert zusammengeklebt. Somit werden die Kräfte über einen Winkel übertragen. Vorzugsweise sollte der Winkel zwischen der ersten Hauptfaserrichtung und der zweiten Hauptfaserrichtung 45° nicht überschreiten.

Fig. 10 zeigt ein siebtes Ausführungsbeispiels eines Bauteils 700. Das Bauteil weist ein erstes Holzelement 710 und ein zweites Holzelement 720 auf.

Das erste Holzelement 710 weist eine erste zu dem zweiten Holzelemente zugewandte Seite, eine zweite Seite 712, eine dritte Seite 713, eine vierte gegenüber der zweiten Seite 712 angeordnete Seite, eine fünfte gegenüber der dritten Seite 713 angeordnete Seite und eine sechstes gegenüber der ersten Seite angeordnete Seite auf. Die zweite und vierte Seite sind jeweils mit der gleichen Krümmung, aber mit unterschiedlichen Radien gekrümmt. Vorzugsweise handelt es sich um eine kreisförmige oder parabelförmige Krümmung, so dass die zweite und vierte Seite jeweils ein Winkelabschnitt einer Mantelfläche eines Zylinders bilden. Die dritte und fünfte Seite ist parallel angeordnet. Das erste Holzelement 710 weist eine erste Hauptfaserrichtung auf, die parallel zu der zweiten und dritten Seite ausgebildet ist. Das heisst, die erste Hauptfaserrichtung ist ebenfalls gekrümmt und folgt der zweiten und vierten Seite. Die Hauptfaserrichtung schneidet die erste und sechste Seite jeweils rechtwinkelig.

Das zweite Holzelement 720 ist identisch zu dem ersten Holzelement 710 aufgebaut, so dass die ebenfalls gekrümmte zweite Hauptfaserrichtung des zweiten Holzelements 720 ebenfalls die erste dem ersten Holzelement 710 zugewandten Seite rechtwinkelig schneidet.

Das erste Holzelement 710 ist an der ersten Seite mit der ersten Seite des zweiten Holzelements 720 verklebt, wie es im Zusammenhang mit dem Bauteil 100 beschrieben wurde.

Das heisst, dass mit der erfindungsgemässen Technik Hohlzylinder beliebiger Grösse aus Holz hergestellt werden können, die die Kraft in Umfangs-, Längs und Torsionsrichtung übertragen. Durch eine Aneinanderreihung solcher Hohlzylinder könnte Rohre oder hohle Stützen aus Holz produziert werden. Es wäre ebenfalls denkbar, das erste Holzelement 710 und das zweite Holzelement aus Brett- oder Furniersperrholz zu produzieren. In dem ersten Holzelement 710 könnten erste Schichten mit der ersten Hauptfaserrichtung bestehen und benachbarte zweite Schichten mit einer dritten Hauptfaserrichtung, die senkrecht zu der ersten Hauptfaserrichtung verläuft und parallel zu der Schichtebene verläuft. In dem Holzelement 710 könnte die Schichtebene gekrümmt und parallel zu der zweiten Seite 712 angeordnet sein. So könnte bei Realisierung als Rohren eine Kraftübertragung in Umfangsrichtung und in Rohrlängsrichtung realisiert werden.

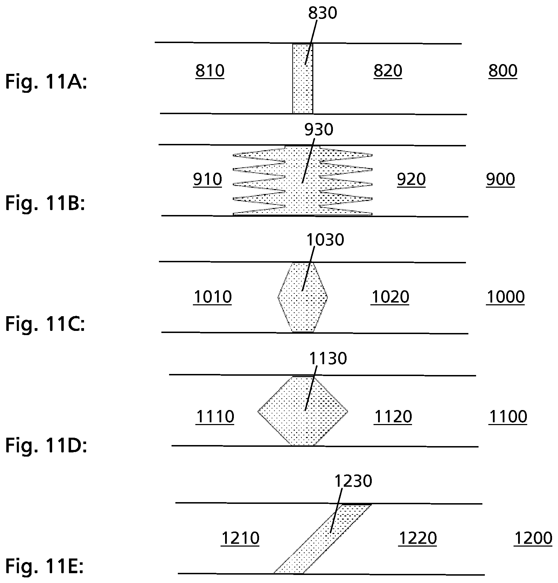

Fig. 11A bis F zeigen verschiedene Formen des mit Klebstoff gefüllten Spalts zwischen dem ersten Holzelement und dem zweiten Holzelement.

Fig. 11A zeigt ein Bauteil 800 mit einem ersten Holzelement 810 und einem zweiten Holzelement 820. Hier ist die erste Seite des ersten Holzelements 810 und die erste Seite des zweiten Holzelements 820 als ebene Fläche realisiert, die rechtwinkelig zu der zweiten und dritten Seite des ersten und zweiten Holzelements 810 und 820 angeordnet ist. Somit ergibt sich eine Spaltform 830 wie in dem ersten bis siebten Ausführungsbeispiel der Erfindung.

Fig. 11B zeigt ein Bauteil 900 mit einem ersten Holzelement 910 und einem zweiten Holzelement 920. Hier ist die erste Seite des ersten Holzelements 910 und die erste Seite des zweiten Holzelements 920 jeweils als Keilzinken realisiert. Anders als bei Keilzinkenverbindungen des Stands der Technik überlappen sich die Keilzinken aber nicht und greifen auch nicht ineinander. Dies hat den Vorteil, dass sich der ausgehärtete Klebstoff in dem Spalt 930 mit dem ersten Holzelement 910 und dem zweiten Holzelement 920 verkeilt. Trotzdem muss das erste Holzelement 910 nicht in das zweite Holzelement 920 eingefädelt werden, was bei grossen Holzelementen evtl. schwierig ist.

Fig. 11C zeigt ein Bauteil 1000 mit einem ersten Holzelement 1010 und einem zweiten Holzelement 1020. Hier sind die erste Seite des ersten Holzelements 1010 und die erste Seite des zweiten Holzelements 1020 jeweils konkav, hier als Dreiecksform realisiert. Dies entspricht einer Keilnut. Dies hat den Vorteil, dass sich der ausgehärtete Klebstoff in dem Spalt 1030 mit dem ersten Holzelement 1010 und dem zweiten Holzelement 1020 verkeilt. Trotzdem muss das erste Holzelement 1010 nicht in das zweite Holzelement 1020 eingefädelt werden, was bei grossen Holzelementen evtl. schwierig ist.

Fig. 11D zeigt ein Bauteil 1100 mit einem ersten Holzelement 1110 und einem zweiten Holzelement 1120. Hier sind die erste Seite des ersten Holzelements 1110 und die erste Seite des zweiten Holzelements 1120 jeweils konkav, hier als dreiecksform realisiert. Dies entspricht einer Keilnut. Im Unterschied zu Fig. 11C ist die Keilnut tiefer realisiert. Dies hat den Vorteil, dass sich der ausgehärtete Klebstoff in dem Spalt 1130 mit dem ersten Holzelement 1110 und dem zweiten Holzelement 1120 verkeilt. Trotzdem muss das erste Holzelement 1110 nicht in das zweite Holzelement 1120 eingefädelt werden, was bei grossen Holzelementen evtl. schwierig ist.

Fig. 11E zeigt ein Bauteil 1200 mit einem ersten Holzelement 1210 und einem zweiten Holzelement 1220. Hier sind die erste Seite des ersten Holzelements 1210 und die erste Seite des zweiten Holzelements 1220 jeweils schräg realisiert, so dass die erste Seite des ersten Holzelements 1210 und die erste Seite des zweiten Holzelements 1220 parallel angeordnet sind. Dies hat den Vorteil, dass sich der ausgehärtete Klebstoff in dem Spalt 1230 mit dem ersten Holzelement 1210 und dem zweiten Holzelement 1220 verkeilt. Trotzdem muss das erste Holzelement 1210 nicht in das zweite Holzelement 1220 eingefädelt werden, was bei grossen Holzelementen evtl. schwierig ist.

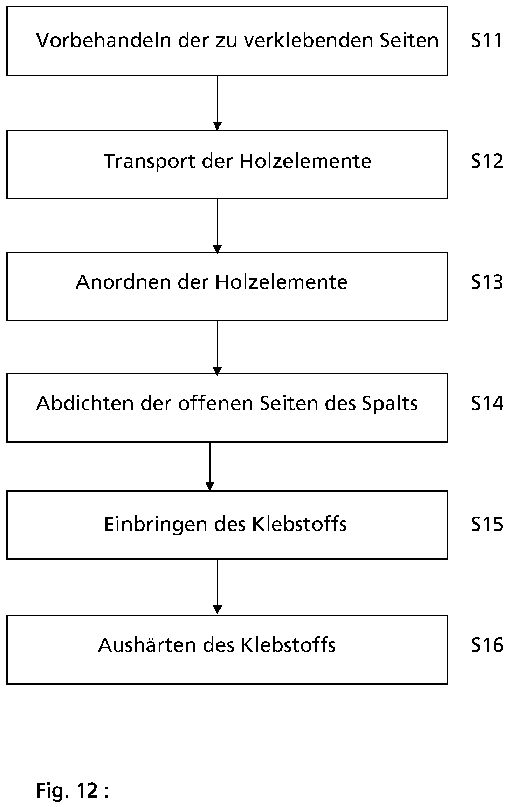

Fig. 12 zeigt das Verfahren zum Verkleben zweier Holzelemente. In Schritt S11 werden zwei Holzelemente für die Verbindung vorbehandelt. Dies beinhaltet zum Beispiel das Glätten der zu verklebenden Oberfläche (erste Seite) der Holzelemente. Dies kann zum Beispiel durch Abschleifen oder durch Verspachteln geschehen. Danach sollte die zu verklebende Oberfläche gereinigt werden und für den Transport mit einer Schutzfolie abgedeckt werden. In Schritt S12 werden die Holzelemente an den Ort der Verbindung transportiert. Natürlich kann der Schritt S12 auch vor dem Schritt S11 stattfinden. In Schritt S13 werden die Holzelemente so angeordnet, dass ein Spalt zwischen diesen Holzelementen verbleibt und zumindest eine Hauptfaserrichtung jedes Holzelements die zu verklebende Fläche schneidet. Vorzugsweise werden die Holzelemente in dieser Position fixiert, so dass eine Bewegung der Holzelemente gegeneinander nicht mehr möglich ist. Sind die zu verklebenden Flächen durch eine Schutzfolie geschützt, so muss diese Schutzfolie vor dem Anordnen der Holzelemente entfernt werden. In Schritt S14 werden die offenen Ränder dieses Spalts abgedichtet, zum Beispiel durch Verspachteln der offenen Seiten. In Schritt S15 wird der Klebstoff in den Spalt eingebracht, z.B. durch ein in die Spachtelmasse gebohrtes oder freigelassenes Loch. Schritt S16 besteht aus dem Aushärten des Klebstoffs.

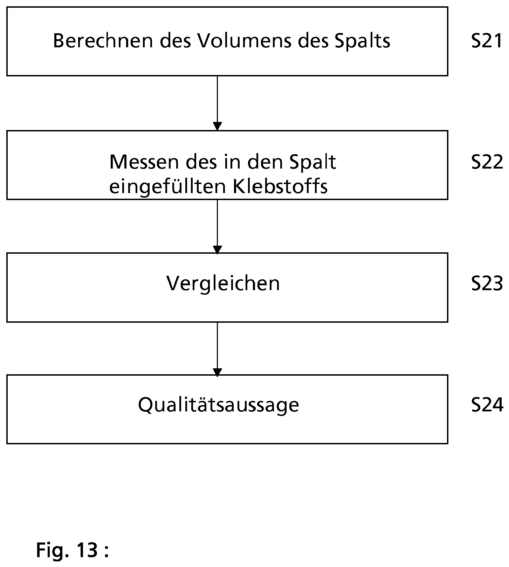

Fig. 13 zeigt ein Verfahren zur Qualitätsprüfung der Klebeverbindung. Dazu berechnet man theoretisch das Volumen des abgedichteten Spalts zwischen den beiden Holzelementen (S21). In Schritt S22 wird die Menge oder das Volumen des in den Spalt eingefüllten Klebstoffs gemessen. Danach wird das berechnete Volumen mit dem eingefüllten Volumen verglichen (S23). Wir signifikant mehr Klebstoff eingefüllt als theoretisch berechnet, so ist es wahrscheinlich, dass der Klebstoff in das Holz gelaufen ist und die Qualität der Verbindung nicht sichergestellt werden kann. Wir signifikant weniger Klebstoff eingefüllt als theoretisch berechnet, so bestehen Lufteinschlüsse in dem Klebstoff und die Qualität der Verbindung kann ebenfalls nicht sichergestellt werden. In Schritt S24 wird eine Aussage über die Qualität der Verbindung getroffen.

Bei grossen zu verklebenden Flächen ist es weiter vorteilhaft, diese in gegeneinander abgedichtete Abschnitte einzuteilen und für jeden dieser Abschnitte das Qualitätsprüfungsverfahren nach Fig. 13 durchzuführen. Somit kann für jeden Abschnitt eine Aussage über die Qualität getroffen werden, und evtl. der Klebevorgang für diesen Abschnitt wiederholt werden.

Die hier dargestellten Ausführungsformen sind nur als Beispiele beschrieben und sollen den Schutzbereich nicht einschränken. Alle, auch nicht beschriebene, Ausführungsbeispiele, die unter den durch die Ansprüche definierten Schutzbereich fallen gehören zu der Erfindung.

## Patentansprüche

1. Verfahren zur Anfertigung eines tragenden, für den Holzbau geeigneten Bauteils, aufweisend ein erstes Holzelements (110, 210, 310) mit zumindest einer ersten Hauptfaserrichtung und eine zweites Holzelement (120, 220, 320) mit zumindest einer zweiten Hauptfaserrichtung, die folgenden Schritte umfassend:
- Anordnen des ersten Holzelements in Bezug auf das zweite Holzelement, sodass eine die erste Hauptfaserrichtung schneidende erste Seite des ersten Holzelements (110, 210, 310) und eine die zweite Hauptfaserrichtung schneidende erste Seite des zweiten Holzelements (120, 220, 320) einen Abstand, der größer als 1 mm ist, einschliessen, wodurch ein Spalt zwischen den ersten Seiten der beiden Holzelemente gebildet wird;
- Abdichten der offenen Seiten des Spaltes;
- Einfüllen eines Zweikomponentenklebstoffes in den Spalt zwischen der ersten Seite des ersten Holzelements (110, 210, 310) und der ersten Seite des zweiten Holzelements (120, 220, 320);
- unverpresstes Verkleben der Holzelemente und Aushärten des Klebstoffs zu einer Klebstoffschicht,
**dadurch gekennzeichnet,**
- **dass** das Volumen des zumindest teilweise abgedichteten Spaltes zwischen den Holzelementen theoretisch berechnet wird (S21),
- **dass** das Volumen des eingefüllten Zweikomponentenklebstoffs gemessen wird (S22),
- **dass** das berechnete Volumen des Spalts mit dem gemessenen Volumen des eingefüllten Zweikomponentenklebstoffs verglichen wird (S23), und
- **dass** eine Aussage über die Qualität der Verbindung getroffen wird, auf der Basis dass ein signifikantes Abweichen des berechneten Volumens von dem gemessenen Volumen auf eine verminderte Qualität der Verbindung hinweist (S24).

2. Das Verfahren nach Anspruch 1, wobei zumindest ein Teil der offenen Ränder des Spaltes durch Verspachteln abgedichtet wird.

3. Das Verfahren nach einem der Ansprüche 1 oder 2, wobei vor dem Anordnungsschritt die erste Seite des ersten Holzelements (110, 210, 310) und/oder die erste Seite des zweiten Holzelements (120, 220, 320) geschliffen oder verspachtelt wird.

4. Das Verfahren nach einem der Ansprüche 1 bis 3, wobei die erste Seite des ersten Holzelements (110, 210, 310) zu der ersten Seite des zweiten Holzelements (120, 220, 320) in einem Abstand, der grösser als 3mm, oder grösser als 5mm ist, angeordnet wird.

5. Das Verfahren nach einem der Ansprüche 1 bis 4, wobei die angeordneten Holzelemente in ihrer Position fixiert sind, so dass sich die Holzelemente nicht gegeneinander bewegen.

6. Das Verfahren nach einem der Ansprüche 1 bis 5, wobei
das zwischen den ersten Seiten des ersten und zweiten Holzelements eingeschlossene Volumen in untereinander abgedichtete Untervolumen unterteilt wird,
das zwischen den ersten Seiten des ersten und zweiten Holzelements eingeschlossene Volumen eines ersten Untervolumens theoretisch berechnet wird,
das Volumen des in das erste Untervolumen eingefüllten Zweikomponentenklebstoffs gemessen wird,
das berechnete Volumen mit dem gemessenen Volumen verglichen wird, und
eine Aussage über die Qualität der Verbindung in dem ersten Untervolumen auf der Basis des Vergleichs getroffen wird, auf der Basis, dass ein signifikantes Abweichen des berechneten Untervolumens von dem gemessenen Untervolumen des eingefüllten Zweikomponentenklebstoffes auf eine verminderte Qualität der Verbindung hinweist.

7. Ein für den Holzbau geeignetes Bauteil, angefertigt nach dem Verfahren eines der Ansprüche 1 bis 6, wobei dadurch, dass die Kraft, die über die Hauptfaserrichtungen der Holzelemente übertragen wird, in die Klebstoffschicht eingeleitet und von dieser an das jeweils stirnseitig verklebte Holzelement übertragen wird, eine tragende Verbindung, das heisst eine Verbindung, die für tragende Bauteile im Holzbau geeignet ist, und die eine Zugkraft von mindestens 5 Newton pro Quadratmillimeter, oder mindestens 10 Newton pro Quadratmillimeter aushält, zwischen den Holzelementen geschaffen wird.

8. Das Bauteil nach Anspruch 7, wobei der Abstand grösser als 3 mm, oder grösser als 5mm ist.

9. Das Bauteil nach einem der Ansprüchen 7 oder 8, wobei die erste Hauptfaserrichtung parallel zu der zweiten Hauptfaserrichtung angeordnet ist.

10. Das Bauteil nach einem der Ansprüchen 7 bis 9, wobei das erste Holzelement (110, 210, 310) an der ersten Seite in der ersten Hauptfaserrichtung das zweite Holzelement (120, 220, 320) an der ersten Seite nicht überlappt.

11. Das Bauteil nach einem der Ansprüchen 7 bis 10, wobei das erste Holzelement eine Mehrzahl von ersten Holzschichten (311) mit einer ersten Hauptfaserrichtung (313) und eine Mehrzahl von zweiten Holzschichten (312) mit einer dritten Hauptfaserrichtung (314), aufweist, und wobei das zweite Holzelement eine Mehrzahl von ersten Holzschichten (321) mit einer zweiten Hauptfaserrichtung (323) und eine Mehrzahl von zweiten Holzschichten (322) mit einer vierten Hauptfaserrichtung aufweist, und wobei sich die ersten Holzschichten und die zweiten Holzschichten in dem ersten und dem zweiten Holzelement jeweils abwechseln, an der ersten Seite zumindest einen Bereich mit der zweiten Hauptfaserrichtung aufweist und zumindest einen Bereich mit einer vierten Hauptfaserrichtung aufweist, wobei der Bereich des ersten Holzelements (110, 210, 310) mit der ersten Hauptfaserrichtung mit dem Bereich des zweiten Holzelements (120, 220, 320) mit der zweiten Hauptfaserrichtung verklebt ist.

12. Das Bauteil nach Anspruch 11, wobei die dritte Hauptfaserrichtung (314) rechtwinkelig zu der ersten Hauptfaserrichtung (313) angeordnet ist und wobei die vierte Hauptfaserrichtung (323) rechtwinkelig zu der zweiten Hauptfaserrichtung angeordnet ist.

13. Das Bauteil nach Ansprüchen 11 und 12, wobei das erste Holzelement und das zweite Holzelement derart angeordnet sind, dass die ersten Schichten (311) des ersten Holzelements (310) mit den ersten Schichten (321) des zweiten Holzelements (320) verklebt sind, und dass die zweiten Schichten (312) des ersten Holzelements (310) mit den zweiten Schichten (322) des zweiten Holzelements (320) verklebt sind.

14. Eine tragende Geschossdecke (400, 450) für ein Gebäude, die durch eine Vielzahl von einen Schichtbau aufweisenden Holzelementen (310, 320, 401, 402, 404,451, 452, 455456,) gebildet wird,
- wobei jedes Holzelement jeweils alternierend eine erste Schicht (311) und eine zweite Schicht (312) aufweist, wobei die ersten Schichten (311) jeweils eine erste Hauptfaserrichtung (313) und die zweiten Schichten (312) jeweils eine dritte Hauptfaserrichtung (314) aufweisen, wobei die erste (313) und die dritte Hauptfaserrichtung (314) parallel zu einer Ebene der Geschossdecke verlaufen,
- **dadurch gekennzeichnet, dass** jedes Holzelement eine erste Seite aufweist, die durch die erste Hauptfaserrichtung der ersten Schicht schneidet, und eine zweite Seite, die durch die dritte Hauptfaserrichtung der zweiten Schicht schneidet,
- wobei ein erstes Holzelement (401, 451) an zumindest einer Seite mit einem benachbarten zweiten Holzelement (402, 455) an dessen entsprechenden ersten Seite verklebt ist, und wobei das erste Holzelement (401, 451) an zumindest einer zweiten Seite mit einem benachbarten dritten Holzelement (404, 456) an dessen entsprechenden zweiten Seite verklebt ist,
wobei, die erste Seite des ersten Holzelementes mit der ersten Seite des zweiten Holzelementes und die zweite Seite des ersten Holzelementes mit der zweiten Seite des dritten Holzelementes jeweils mit einem Abstand von größer ist als 1 mm pressdrucklos mit einem Zweikomponentenklebstoff verklebt sind.

15. Geschossdecke nach Anspruch 14, wobei das erste Holzelement (401, 451) auf der ersten Seite in der ersten Hauptfaserrichtung das zweite Holzelement (402, 455) auf der ersten Seite nicht überlappt, und wobei die erste Seite des ersten Holzelements (401, 451) mit der ersten Seite des zweiten Holzelements (404, 456) verklebt ist, ohne dass ein weiteres Holzelement mit der zweiten Seite des ersten Holzelements und der zweiten Seite des zweiten Holzelements verklebt ist.

## Claims

1. Method for manufacturing a load-bearing component suitable for timber construction, comprising a first wooden element (110, 210, 310) with at least one first main grain direction and a second wooden element (120, 220, 320) with at least one second main grain direction, comprising the following steps:
- arranging the first wooden element in relation to the second wooden element so that a first side of the first wooden element (110, 210, 310) intersecting the first main grain direction and a first side of the second wood element (120, 220, 320) intersecting the second main grain direction enclose a distance greater than 1 mm, thereby forming a gap between the first sides of the two wood elements;
- Sealing the open sides of the gap;
- filling a two-component adhesive into the gap between the first side of the first wooden element (110, 210, 310) and the first side of the second wooden element (120, 220, 320);
- bonding the wooden elements without pressing and allowing the adhesive to cure to form an adhesive layer,
**characterised in that**
- that the volume of the at least partially sealed gap between the wooden elements is calculated theoretically (S21),
- the volume of the filled two-component adhesive is measured (S22),
- the calculated volume of the gap is compared with the measured volume of the filled two-component adhesive (S23), and
- a statement is made about the quality of the bond on the basis that a significant deviation of the calculated volume from the measured volume indicates a reduced quality of the bond (S24).

2. The method according to claim 1, wherein at least part of the open edges of the gap are sealed by applying a filler.

3. The method according to claim 1 or 2, wherein the first side of the first wooden element (110, 210, 310) and/or the first side of the second wooden element (120, 220, 320) is sanded or filled before the arrangement step.

4. The method according to any one of claims 1 to 3, wherein the first side of the first wooden element (110, 210, 310) is arranged at a distance greater than 3 mm or greater than 5 mm from the first side of the second wooden element (120, 220, 320).

5. The method according to any one of claims 1 to 4, wherein the arranged wooden elements are fixed in their position so that the wooden elements do not move against each other.

6. The method according to any one of claims 1 to 5, wherein
the volume enclosed between the first sides of the first and second wooden elements is divided into sub-volumes sealed off from one another,
the volume enclosed between the first sides of the first and second wooden elements of a first sub-volume is calculated theoretically,
the volume of the two-component adhesive filled into the first sub-volume is measured,
the calculated volume is compared with the measured volume, and
a statement is made about the quality of the bond in the first sub-volume on the basis of the comparison, on the basis that a significant deviation of the calculated sub-volume from the measured sub-volume of the filled two-component adhesive indicates a reduced quality of the bond.

7. A component suitable for timber construction manufactured according to the method of any one of claims 1 to 6, wherein the force transmitted via the main grain directions of the wooden elements is introduced into the adhesive layer and transmitted from this to the respective wooden element bonded at the end grain, such that a load-bearing bond, i.e. a connection that is suitable for load-bearing components in timber construction and can withstand a tensile force of at least 5 Newtons per square millimetre or at least 10 Newtons per square millimetre, is formed between the wooden elements.

8. The component according to claim 7, wherein the distance is greater than 3 mm or greater than 5 mm.

9. The component according to one of claims 7 or 8, wherein the first main grain direction is arranged parallel to the second main grain direction.

10. The component according to one of claims 7 to 9, wherein the first wooden element (110, 210, 310) on the first side in the first main grain direction does not overlap the second wooden element (120, 220, 320) on the first side.

11. The component according to one of claims 7 to 10, wherein the first wood element has a plurality of first wood layers (311) with a first main grain direction (313) and a plurality of second wood layers (312) with a third main grain direction (314), and wherein the second wood element comprises a plurality of first wood layers (321) with a second main grain direction (323) and a plurality of second wood layers (322) with a fourth main grain direction, and wherein the first wood layers and the second wood layers alternate in the first and second wood elements, respectively, has at least one area with the second main grain direction on the first side and has at least one area with a fourth main grain direction, wherein the area of the first wood element (110, 210, 310) with the first main grain direction is bonded to the area of the second wood element (120, 220, 320) with the second main grain direction.

12. The component according to claim 11, wherein the third main grain direction (314) is arranged at right angles to the first main grain direction (313) and wherein the fourth main grain direction (323) is arranged at right angles to the second main grain direction.

13. The component according to claims 11 and 12, wherein the first wooden element and the second wooden element are arranged such that the first layers (311) of the first wooden element (310) are bonded to the first layers (321) of the second wooden element (320), and that the second layers (312) of the first wooden element (310) are bonded to the second layers (322) of the second wooden element (320).

14. A load-bearing floor ceiling (400, 450) for a building, which is formed by a plurality of wooden elements (310, 320, 401, 402, 404, 451, 452, 455, 456) having a layered structure,
- wherein each wooden element has a first layer (311) and a second layer (312) alternating with each other (312), wherein the first layers (311) each have a first main grain direction (313) and the second layers (312) each have a third main grain direction (314), wherein the first (313) and third main grain directions (314) run parallel to a plane of the floor slab,
**characterized**
- **in that** each wood element has a first side intersected by the first principal grain direction of the first layer and a second side intersected by the third principal grain direction of the second layer,
- **in that** a first wood element (401, 451) is bonded on at least one side to an adjacent second wood element (402, 455) on its corresponding first side, and wherein the first wood element (401, 451) is bonded on at least one second side to an adjacent third wood element (404, 456) on its corresponding second side, and
wherein the first side of the first wooden element is bonded to the first side of the second wooden element and the second side of the first wooden element is bonded to the second side of the third wooden element, in each case with a distance greater than 1 mm, without press bonding, using a two-component adhesive.

15. The floor ceiling according to claim 14, wherein the first wooden element (401, 451) does not overlap the second wooden element (402, 455) on the first side in the first main grain direction, and wherein the first side of the first wooden element (401, 451) is bonded to the first side of the second wooden element (404, 456) without any further wooden element being bonded to the second side of the first wooden element and the second side of the second wooden element.

## Revendications

1. Procédé de fabrication d'un élément de construction porteur adapté à la construction en bois, comprenant un premier élément en bois (110, 210, 310) avec au moins une première direction principale des fibres et un deuxième élément en bois (120, 220, 320) avec au moins une deuxième direction principale des fibres, comprenant les étapes suivantes :
- disposition du premier élément en bois par rapport au deuxième élément en bois de telle sorte qu'un premier côté du premier élément en bois (110, 210, 310) coupant la première direction principale des fibres et un premier côté du deuxième élément en bois (120, 220, 320) coupant la deuxième direction principale des fibres comprennent une distance supérieure à 1 mm, formant ainsi un espace entre les premiers côtés des deux éléments en bois ;
- sceller les côtés ouverts de l'espace ;
- remplir l'espace entre le premier côté du premier élément en bois (110, 210, 310) et le premier côté du deuxième élément en bois (120, 220, 320) avec un adhésif à deux composants ;
- collage sans compression des éléments en bois et durcissement de l'adhésif pour former une couche d'adhesif,
**caractérisé en ce que**
- que le volume de l'espace au moins partiellement scellé entre les éléments en bois est calculé théoriquement (S21),
- que le volume de l'adhésif à deux composants injectée est mesuré (S22),
- que le volume calculé de l'interstice est comparé au volume mesuré de l'adhésif à deux composants injectée (S23), et
- une conclusion est tirée quant à la qualité de la liason, sur la base du fait qu'un écart significatif entre le volume calculé et le volume mesuré indique une qualité réduite de la liaison (S24).

2. Procédé selon la revendication 1, dans lequel au moins une partie des bords ouverts de la fente est scellée par masticage.

3. Procédé selon l'une des revendications 1 ou 2, dans lequel, avant l'étape de disposition, le premier côté du premier élément en bois (110, 210, 310) et/ou le premier côté du deuxième élément en bois (120, 220, 320) est poncé ou mastiqué.

4. Procédé selon l'une des revendications 1 à 3, dans lequel le premier côté du premier élément en bois (110, 210, 310) est disposé par rapport au premier côté du deuxième élément en bois (120, 220, 320) à une distance supérieure à 3 mm ou supérieure à 5 mm.

5. Procédé selon l'une des revendications 1 à 4, dans lequel les éléments en bois disposés sont fixés dans leur position de manière à ce que les éléments en bois ne puissent pas se déplacer les uns par rapport aux autres.

6. Procédé selon l'une des revendications 1 à 5, dans lequel
le volume enfermé entre les premiers côtés des premier et deuxième éléments en bois est divisé en sous-volumes étanches les uns par rapport aux autres,
le volume d'un premier sous-volume, enfermé entre les premières faces des premier et deuxième éléments en bois, est calculé théoriquement,
le volume de l'adhésif à deux composants remplissant le premier sous-volume est mesuré,
le volume calculé est comparé au volume mesuré, et
une conclusion est tirée quant à la qualité de la liaison dans le premier sous-volume sur la base de la comparaison, en partant du principe qu'un écart significatif entre le sous-volume calculé et le sous-volume mesuré de l'adhésif à deux composants versée indique une qualité réduite de la liaison.

7. Élément de construction adapté à la construction en bois fabriqué selon le procédé de l'une des revendications 1 à 6, dans lequel la force transférée par les directions principales des fibres des éléments en bois est introduite dans la couche de l'adhésif et transférée par celle-ci à l'élément en bois collé en bout, ce qui permet d'obtenir une liaison porteuse, c'est-à-dire une liaison adaptée aux éléments porteurs dans la construction en bois et qui résiste à une force de traction d'au moins 5 Newtons par millimètre carré, ou d'au moins 10 Newtons par millimètre carré, est créé entre les éléments en bois.

8. L'élément de construction selon la revendication 7, la distance étant supérieure à 3 mm ou supérieure à 5 mm.

9. L'élément de construction selon l'une des revendications 7 ou 8, dans lequel la première direction principale des fibres est parallèle à la deuxième direction principale des fibres.

10. L'élément de construction selon l'une des revendications 7 à 9, dans lequel le premier élément en bois (110, 210, 310) ne chevauche pas le deuxième élément en bois (120, 220, 320) sur le premier côté dans la première direction principale des fibres.

11. L'élément de construction selon l'une des revendications 7 à 10, dans lequel le premier élément en bois comprend une pluralité de premières couches de bois (311) ayant une première direction principale des fibres (313) et une pluralité de deuxièmes couches de bois (312) ayant une troisième direction principale des fibres (314) et dans lequel le deuxième élément en bois comprend une pluralité de premières couches de bois (321) avec une deuxième direction principale des fibres (323) et une pluralité de deuxièmes couches de bois (322) avec une quatrième direction principale des fibres, et dans lequel les premières couches de bois et les deuxièmes couches de bois alternent respectivement dans les premier et deuxième éléments en bois, présente sur le premier côté au moins une zone avec la deuxième direction principale des fibres et présente au moins une zone avec une quatrième direction principale des fibres, la zone du premier élément en bois (110, 210, 310) avec la première direction principale des fibres étant collée à la zone du deuxième élément en bois (120, 220, 320) avec la deuxième direction principale des fibres.

12. L'élément de construction selon la revendication 11, dans lequel la troisième direction principale des fibres (314) est disposée perpendiculairement à la première direction principale des fibres (313) et dans lequel la quatrième direction principale des fibres (323) est disposée perpendiculairement à la deuxième direction principale des fibres.

13. L'élément de construction selon l'une des revendications 11 et 12, dans lequel le premier élément en bois et le deuxième élément en bois sont disposés de telle sorte que les premières couches (311) du premier élément en bois (310) sont collées aux premières couches (321) du deuxième élément en bois (320), et que les deuxièmes couches (312) du premier élément en bois (310) sont collées aux deuxièmes couches (322) du deuxième élément en bois (320).

14. Plancher porteur (400, 450) pour un bâtiment, formé par une pluralité d'éléments en bois (310, 320, 401, 402, 404, 451, 452, 455, 456) présentant une structure stratifiée,
- chaque élément en bois comportant alternativement une première couche (311) et une deuxième couche (312), les premières couches (311) présentant chacune une première direction principale des fibres (313) et les deuxièmes couches (312) présentant chacune une troisième direction principale des fibres (314), la première (313) et la troisième (314) direction principale des fibres s'étendant parallèlement à un plan du plafond,
**caractérisé**
- **en ce que** chaque élément en bois présentant un premier côté qui coupe la première direction principale des fibres de la première couche et un deuxième côté qui coupe la troisième direction principale des fibres de la deuxième couche,
- **en ce que** un premier élément en bois (401, 451) est collé sur au moins un côté à un deuxième élément en bois adjacent (402, 455) sur son premier côté correspondant, et dans lequel le premier élément en bois (401, 451) est collé sur au moins un deuxième côté à un troisième élément en bois adjacent (404, 456) sur son deuxième côté correspondant, et
ledit premier côté du premier élément en bois étant collé sans pression, à l'aide d'une adhésif à deux composants, au premier côté du deuxième élément en bois et ledit deuxième côté du premier élément en bois étant collé sans pression d'au deuxième côté du troisième élément en bois, avec un écart supérieur à 1 mm dans chaque cas.

15. Plancher selon la revendication 14, dans lequel le premier élément en bois (401, 451) ne chevauche pas le deuxième élément en bois (402, 455) sur le premier côté dans la première direction principale des fibres, et dans lequel le premier côté du premier élément en bois (401, 451) est collé au premier côté du deuxième élément en bois (404, 456) sans qu'un autre élément en bois ne soit collé au deuxième côté du premier élément en bois et au deuxième côté du deuxième élément en bois.
